# EUROPEAN PATENT APPLICATION

(11) **EP 4 641 000 A1**
(43) Date of publication of application: **29.10.2025**
(21) Application number: 23909085.5
(22) Date of filing: 30.06.2023
(51) Int. Cl.: F02B 23/02

(54) **ENGINE IGNITION SYSTEM, IGNITION METHOD, ENGINE, VEHICLE AND TRANSPORT**

(30) Priority: 30.12.2022 CN 202211729965
(71) Applicant: BYD Company Limited, Shenzhen, Guangdong 518118 (CN)
(72) Inventor: PAN, Shiyi, Shenzhen, Guangdong 518118 (CN); HU, Jiangtao, Shenzhen, Guangdong 518118 (CN); LIU, Jing, Shenzhen, Guangdong 518118 (CN)
(74) Representative: Taor, Simon Edward William
(86) International application number: PCT/CN2023/104876
(87) International publication number: WO 2024/139141

(57) **Abstract**

An engine ignition system, an ignition method, an engine, a vehicle and a transport, relating to the technical field of vehicle parts. The ignition system comprises: an ignition member, the ignition member being suitable to be mounted in a combustion chamber of an engine; and a heating device, the heating device being connected to the ignition member and used for heating the ignition member to a set temperature, so that fuel sprayed into the combustion chamber is heated and combusted, the set temperature being greater than or equal to the auto-ignition temperature of the fuel in the combustion chamber.

## Description

### CROSS-REFERENCE TO RELATED APPLICATIONS

The present disclosure claims priority to Chinese Patent Application No. 202211729965.5, on December 30, 2022 and entitled "ENGINE IGNITION SYSTEM, IGNITION METHOD, ENGINE, VEHICLE, AND TRANSPORT". The entire content of the present disclosure is incorporated herein by reference.

### FIELD

The present disclosure relates to the technical field of vehicle components, and more specifically, to an engine ignition system, an ignition method, an engine, a vehicle, and a transport.

### BACKGROUND

In the related art, some fuel engines are provided with a pre-combustion chamber and a spark plug. The spark plug is located in the pre-combustion chamber, and fuel in the pre-combustion chamber is ignited through arc discharge of the spark plug. The fuel in the pre-combustion chamber ignites fuel outside the pre-combustion chamber, thereby causing combustion. However, a structure of such a pre-combustion chamber is complex, and parts and components such as a spark plug are large in size, which causes a high difficulty in structural design and mounting of the pre-combustion chamber on the engine.

Therefore, it is necessary to provide a new technical solution to resolve the foregoing technical problems.

### SUMMARY

An object of the present disclosure is to provide an engine ignition system, an ignition method, an engine, a vehicle, and a transport.

According to a first aspect of the present disclosure, an engine ignition system is provided. The ignition system includes an ignition member and a heating device. The ignition member is adapted to be mounted in a combustion chamber of an engine. The heating device is connected with the ignition member and configured to heat the ignition member to a set temperature, to cause fuel to be injected into the combustion chamber to be heated and combust. The set temperature is greater than or equal to an auto-ignition temperature of the fuel in the combustion chamber.

Optionally, the heating device includes an electric heating module. The electric heating module is electrically connected with the ignition member.

Optionally, the ignition member includes a housing adapted to be mounted in the combustion chamber. The housing defines an ignition cavity configured to connect to a fuel injection system. The housing is provided with a through hole. The ignition cavity is configured to be brought into communication with the combustion chamber through the through hole.

Optionally, the ignition system further includes a heat insulating layer. The heat insulating layer is arranged on an outer wall of the housing.

Optionally, at least part of the housing is spherical. Multiple through holes are provided. The multiple through holes are uniformly distributed on the housing.

Optionally, the electric heating module is electrically connected with the housing and configured to heat the housing to the set temperature.

Optionally, the housing is made of a nickel-chromium alloy or ceramics.

Optionally, the set temperature is greater than or equal to 300°C.

Optionally, the set temperature is greater than or equal to 400°C.

Optionally, the set temperature is greater than or equal to 1.2 times the auto-ignition temperature of the fuel in the combustion chamber.

Optionally, the ignition system further includes a control device. The control device is configured to control, in response to a rotation speed of the engine, the ignition member to be repeatedly heated to the set temperature at a set frequency.

Optionally, a ratio of the set frequency to the rotation speed of the engine is 0.5 or 1.

Optionally, the control device is configured to control, in response to at least one of a position of a piston of the engine, a camshaft phase of the engine, and a crank angle of the engine, a moment the ignition member is heated to the set temperature.

Optionally, the ignition system further includes a control device. The control device is configured to control the heating device to heat the ignition member, to maintain the ignition member at or above the set temperature.

According to a second aspect of the present disclosure, an engine is provided. The engine includes a body and the foregoing engine ignition system. The engine ignition system is arranged on the body.

According to a third aspect of the present disclosure, a transport is provided. The transport includes a movement mechanism and the foregoing engine. The engine is connected with the movement mechanism.

According to a fourth aspect of the present disclosure, a vehicle is provided. The vehicle includes a vehicle body and the foregoing engine. The engine is arranged on the vehicle body. According to a fifth aspect of the present disclosure, an engine ignition method is provided. The ignition method includes:
injecting fuel into a combustion chamber; and
electrically heating an ignition member to a set temperature, to cause the fuel in the combustion chamber to be heated and combust, the ignition member being mounted in the combustion chamber of the engine, and the set temperature being greater than or equal to an auto-ignition temperature of the fuel in the combustion chamber.

Optionally, the electrically heating an ignition member to a set temperature, to cause the fuel in the combustion chamber to be heated and combust, the ignition member being mounted in the combustion chamber of the engine, and the set temperature being greater than or equal to an auto-ignition temperature of the fuel in the combustion chamber includes:
controlling, in response to a rotation speed of the engine, the ignition member to be repeatedly heated to the set temperature at a set frequency.

Optionally, a ratio of the set frequency to the rotation speed of the engine is 0.5 or 1.

Optionally, the electrically heating an ignition member to a set temperature, to cause the fuel in the combustion chamber to be heated and combust, the ignition member being mounted in the combustion chamber of the engine, and the set temperature being greater than or equal to an auto-ignition temperature of the fuel in the combustion chamber includes:
controlling, in response to at least one of a position of a piston of the engine, a camshaft phase of the engine, and a crank angle of the engine, a moment the ignition member is heated to the set temperature.

Optionally, the ignition member is heated between 50° and 0° before a top dead center of a compression stroke.

Optionally, the set temperature is greater than or equal to 300°C.

Optionally, the set temperature is greater than or equal to 400°C.

Optionally, the set temperature is greater than or equal to 1.2 times the auto-ignition temperature of the fuel in the combustion chamber.

In the example, the ignition member mounted in the combustion chamber of the engine can be heated to the set temperature under the action of the heating device. Since the set temperature is greater than or equal to the auto-ignition temperature of the fuel in the combustion chamber, the fuel in the combustion chamber is heated and combusts spontaneously. The engine ignition system has characteristics of a simple structure and easy installation and design.

Other features and advantages of the present disclosure become apparent through the following detailed description of exemplary embodiments of the present disclosure with reference to the accompanying drawings.

### BRIEF DESCRIPTION OF THE DRAWINGS

The accompanying drawings that are incorporated into and constitute a part of the specification illustrate embodiments of the present disclosure, and are used to explain the principle of the present disclosure together with the description thereof.
FIG. 1 is a partial cross-sectional view of an engine according to an embodiment of the present disclosure;
FIG. 2 is a cross-sectional view of an engine according to an embodiment of the present disclosure; and
FIG. 3 is a partial cross-sectional view of an engine according to another embodiment of the present disclosure.

In the drawings:
1. Ignition member; 2. Heating device; 21. Electric heating module; 100. Body; 101: Cylinder; 102: Combustion chamber; 104: Piston; 105: Fuel injection nozzle; 106. Air intake system; 107. Exhaust system; 108. Control device; 111. Temperature sensor; 135. Housing; 136. Heat insulating layer; 137. Power supply; 138. Through hole; and 139. Ignition cavity.

### DETAILED DESCRIPTION

Various exemplary embodiments of the present disclosure are described in detail with reference to the accompanying drawings. It should be noted that unless otherwise specified in detail, relative arrangement of the components and steps, numerical expressions, and numerical values stated in these embodiments do not limit the scope of the present disclosure.

The following descriptions of at least one exemplary embodiment are merely illustrative, and in no way constitute any limitation on the present disclosure and application or use thereof.

Technologies, methods, and devices known to a person of ordinary skill in the related art may not be discussed in detail, but in proper circumstances, the technologies, methods, and devices shall be regarded as a part of the specification.

In all examples shown and discussed herein, any specific value should be construed as merely exemplary and not as a limitation. Therefore, other examples of the exemplary embodiments may have different values.

It should be noted that similar reference numerals and letters denote similar items in the accompanying drawings below. Therefore, once a certain item is defined in an accompanying drawing, the item does not need to be further discussed in subsequent accompanying drawings.

A gasoline engine is used as an example below to describe an engine ignition system provided in the embodiments of the present disclosure in detail. A person skilled in the art may know that the engine ignition system provided in the embodiments of the present disclosure may further be an engine using another fuel, such as natural gas, methanol, ethanol, or diesel oil.

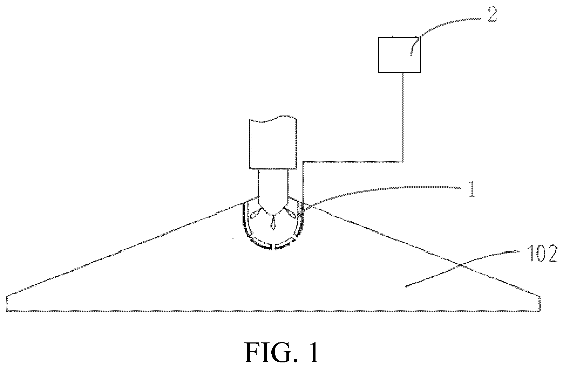

According to an embodiment of the present disclosure, an engine ignition system is provided. As shown in FIG. 1 to FIG. 3, the ignition system includes an ignition member 1 and a heating device 2.

The ignition member 1 is adapted to be mounted in a combustion chamber 102 of an engine.

The heating device 2 is connected with the ignition member 1 and configured to heat the ignition member 1 to a set temperature, to cause fuel injected into the combustion chamber 102 to be heated and combust. The set temperature is greater than or equal to an auto-ignition temperature of the fuel in the combustion chamber 102.

Specifically, the ignition member 1 is configured to generate heat to ignite surrounding fuel. The ignition member 1 is fixed in the combustion chamber 102 through a bolted connection, welding, a snap fit, or the like, for example, fixed to a top of the combustion chamber 102. The ignition member 1 may be made of, but is not limited to, metal, glass, ceramics, or the like. The heating device 2 can heat the ignition member 1 to generate heat. For example, the heating device may heat the ignition member 1 by doing work, or may heat the ignition member 1 through electric heating. Certainly, a manner in which the heating device 2 heats the ignition member 1 is not limited thereto, which may be selected by a person skilled in the art based on an actual requirement. The set temperature refers to an actual temperature of the ignition member 1. A temperature of the ignition member 1 reaches a temperature at which the fuel combusts. Therefore, the set temperature is greater than or equal to the auto-ignition temperature of the fuel.

The fuel injection is usually performed during a compression stroke of the engine. The compression stroke refers to a period in which the air intake system 106 and an exhaust system 107 are turned off and a piston 104 moves from a bottom dead center to a top dead center. During the compression stroke, the fuel is injected into the combustion chamber 102. Then the ignition member 1 is heated by the heating device 2. For example, the ignition member 1 is heated during the compression stroke or heated during a work stroke. During the compression stroke, before the piston 104 reaches the top dead center, with the movement of the piston 104, an air pressure in the combustion chamber 102 gradually increases. A higher pressure in the combustion chamber 102 indicates a lower auto-ignition temperature of the fuel. On the contrary, a lower pressure indicates a higher auto-ignition temperature of the fuel. During the work stroke, the ignition member may also be heated. A person skilled in the art may select an occasion for the ignition member 1 to be heated based on an actual situation, so as to ensure that the fuel combusts in the combustion chamber 102.

The auto-ignition as mentioned in the present disclosure refers to spontaneous combustion of the fuel. Conditions required for the auto-ignition include a fuel concentration, a comburent, a temperature reaching an auto-ignition temperature or above, and the like. In the related art, the engine usually ignites the fuel in the combustion chamber through a spark plug. The ignition as mentioned in the present disclosure refers to combustion of the fuel under the action of a high-temperature point such as a spark or an arc.

The fuel auto-ignition temperature as mentioned in the embodiments of the present disclosure refers to an auto-ignition temperature of the fuel in a current state in the combustion chamber 102, which is related to factors such as a pressure, a temperature, an air amount, and a fuel amount in the combustion chamber 102, may be calculated in real time after collection of related data, or may be obtained by calibrating auto-ignition temperatures in various operating conditions through a table and querying for content of the table.

In the example, the ignition member 1 mounted in the combustion chamber 102 of the engine can be heated to the set temperature under the action of the heating device 2. Since the set temperature is greater than or equal to the auto-ignition temperature of the fuel in the combustion chamber, the fuel in the combustion chamber is heated and combusts spontaneously. The engine ignition system has characteristics of a simple structure and easy installation and design.

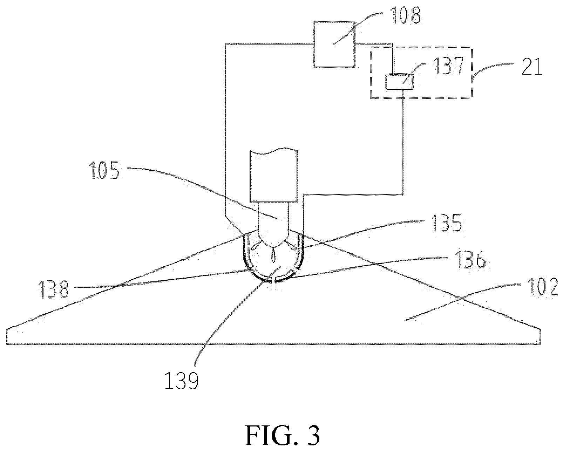

In an example, as shown in FIG. 3, the heating device 2 includes an electric heating module 21. The electric heating module 21 is electrically connected with the ignition member 1.

For example, as shown in FIG. 3, the heating device 2 includes a power supply 137 and a switch device. The power supply 137 and the switch device are electrically connected with the ignition member 1, to form a heating circuit. The power supply 137 is configured to supply power to the heating device 2. The switch device is configured to control on/off of the heating circuit.

In the example, the electric heating module 21 can effectively control parameters such as a heating moment, a heating duration, and a heating temperature of the ignition member. This achieves higher efficiency of the ignition device.

In addition, the electric heating module 21 has a simple structure, thereby simplifying a structure of the engine ignition system.

In an example, the ignition member 1 includes a housing 135 adapted to be mounted in the combustion chamber 102. The housing 135 defines an ignition cavity 139 configured to connect to a fuel injection system. The housing 135 is provided with a through hole 138. The ignition cavity 139 is configured to be brought into communication with the combustion chamber 102 through the through hole 138.

In the related art, for an engine with a pre-combustion chamber, a spark plug is usually arranged in the pre-combustion chamber, and the fuel is ignited through the spark plug.

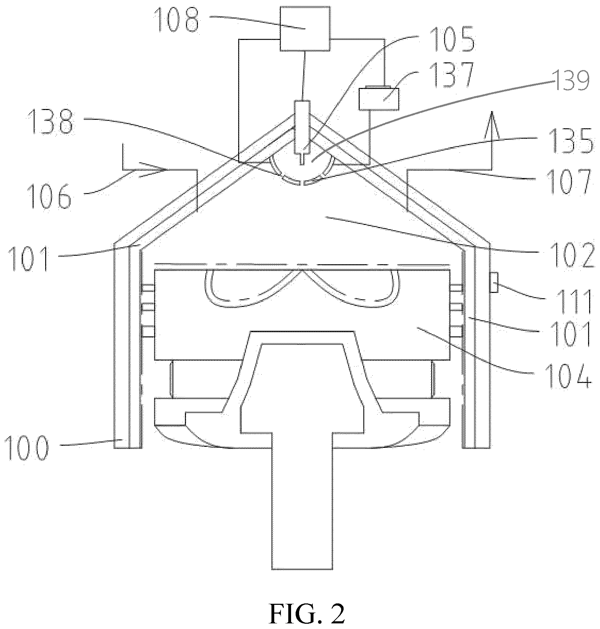

In the example, as shown in FIG. 2 and FIG. 3, the housing 135 defines the ignition cavity 139. The spark plug is removed from the housing 135. The heating device 2 is arranged in the engine ignition system, to heat the housing 135. When the housing 135 is heated, the inside of the ignition cavity 139 can be heated to a set temperature, so that the fuel spontaneously ignites. In addition, the housing 135 prevents heat from being rapidly dissipated, and can heat the fuel in the ignition cavity 139. The ignition cavity 139 enables the heat of the ignition member 1 to be more concentrated. In this way, the fuel entering the ignition cavity 139 can combust. The fuel is pre-combusted in the ignition cavity 139. Then, a high-temperature and high-pressure gas after combustion is injected into the combustion chamber 102 from the through hole 138, so as to ignite the fuel in the combustion chamber 102. It should be noted that before the fuel is ignited, the combustion chamber 102 and the ignition cavity 139 both accommodate a mixed gas with fuel. The fuel in the ignition cavity 139 combusts and is ejected from the through hole 138, to form multiple combusting fuel sprays and ignite the mixed gas in the combustion chamber 102, so as to drive the piston 104 to do work.

A fuel injection nozzle 105 of the fuel injection system is located in the ignition cavity 139. The fuel injected into the fuel injection nozzle 105 can combust in the ignition cavity. The pre-combusted fuel is injected into the combustion chamber 102 through the through hole 138, so as to ignite the fuel in the combustion chamber 102. In this manner, the ignition cavity 139 causes the fuel to combust more rapidly and fully.

Optionally, at least part of the housing 135 is spherical. Multiple through holes 138 are provided. The multiple through holes 138 are uniformly distributed on the housing.

For example, a side of the housing 135 opposite to a top of a cylinder 101 is spherical. An interior of the ignition cavity 139 is also spherical. The multiple through holes 138 are uniformly distributed on the housing. In the example, the combusted fuel in the ignition cavity 139 expands rapidly and is rapidly ejected outward from the through holes 138, so that the fuel in the combustion chamber 102 can be rapidly ignited. The uniformly distributed through holes 138 can cause the combusted fuel to be ejected in multiple directions, so that the fuel in various parts in the combustion chamber 102 can be rapidly ignited. This manner can further reduce a risk of detonation in the combustion chamber 102.

Certainly, in another example, a part of the housing 135 is not limited to a spherical surface, or may be another structure such as an aspherical surface. In addition, a person skilled in the art may set a quantity and diameters of the through holes 138, a volume and a surface area of the ignition cavity 139, and the like based on the actual requirement.

In an example, the electric heating module 21 is electrically connected with the housing 135 and configured to heat the housing 135 to the set temperature.

For example, the electric heating module 21 is connected to the housing 135 through a wire to form a heating circuit. The housing 135 is heated through electric heating.

Preferably, the housing 135 is made of a nickel-chromium alloy, or the like. The foregoing material is resistant to high temperature and oxidation, has a small thermal expansion coefficient, generates heat quickly when energized, and can cause the temperature of the housing 135 to rapidly reach a set temperature, that is, the auto-ignition temperature of the fuel.

It should be noted that to overcome impact of a high temperature on strength of a body 100, multiple manners may be adopted. For example, the body 100 is designed as an integrated body 100, or the body 100 is made of a material with higher heat resistance, or a heat insulating structure is arranged outside the combustion chamber 102, to reduce heat radiation of the combustion chamber 102 to the outside. As to which manner to be adopted, a person skilled in the art may make an adaptive selection based on an actual situation under the guidance of the embodiments of the present disclosure.

Before the piston 104 reaches the top dead center, with the movement of the piston 104, the air pressure in the combustion chamber 102 gradually increases. A higher pressure in the combustion chamber 102 indicates a lower ignition point. On the contrary, a lower pressure indicates a higher ignition point. A specific temperature value satisfying a preset rule may be selected based on an actual situation, to ensure that the fuel combusts in the combustion chamber 102. Generally, to ensure that the fuel can combust in the combustion chamber 102, the temperature of the ignition member 1 needs to be greater than or equal to 300°C. In some operating conditions, the temperature of the ignition member needs to be greater than or equal to 400°C, so that the fuel can combust.

In an example, the set temperature is greater than or equal to 1.2 times the auto-ignition temperature of the fuel in the combustion chamber 102. In other words, the temperature of the ignition member needs to reach 1.2 times the auto-ignition temperature of the fuel.

Under the condition, the engine ignition system can ensure that the fuel injected by the fuel injection system into the combustion chamber 102 rapidly combusts.

For example, if the auto-ignition temperature of the fuel is 300°C, the set temperature is greater than or equal to 360°C. In this manner, it can be ensured that the fuel injected by the fuel injection system into the combustion chamber 102 can rapidly combust.

For example, if the auto-ignition temperature of the fuel is 400°C, the set temperature is greater than or equal to 480°C. In this manner, it can be ensured that the fuel injected by the fuel injection system into the combustion chamber 102 can rapidly combust.

Certainly, a ratio of the set temperature to the auto-ignition temperature is not limited to that in the foregoing embodiment, which may be selected by a person skilled in the art based on the actual requirement.

In an example, the engine ignition system further includes a heat insulating layer 136. The heat insulating layer 136 is arranged on an outer wall of the housing 135.

The heat insulating layer 136 can play a role of heat insulation, to prevent the heat of the ignition member 1 from being dissipated outward, thereby causing the temperature in the ignition cavity 139 to quickly increase. This causes the temperature of the ignition member 1 to quickly increase to above the auto-ignition temperature of the fuel.

For example, the heat insulating layer 136 is made of porous anodic alumina. The porous anodic alumina is an aluminum oxide material obtained by anodizing aluminum metal under an acidic condition. The material has a good heat insulation effect. For example, the heat insulating layer 136 is formed on the body, the cylinder, a cylinder sleeve, or an exhaust pipe through a powder metallurgy process.

Optionally, the heat insulating layer 136 is made of silicon dioxide reinforced porous anodic alumina. A silicon dioxide coating with a micron-sized thickness is formed on a surface of the porous anodic alumina. The silicon dioxide coating can effectively improve wear resistance of the porous anodic alumina. The material has a feature of excellent heat insulating performance, and can effectively prevent the heat of an engine from being dissipated.

Certainly, the material of the heat insulating layer 136 is not limited to that in the foregoing embodiment, which may be selected by a person skilled in the art based on the actual requirement.

A larger thickness of the heat insulating layer 136 indicates a better heat insulation effect. However, a larger thickness also causes the heat insulating layer 136 to easily fall off the ignition member. Preferably, the thickness of the heat insulating layer 136 ranges from 50 µm to 200 µm. Within the range, the heat insulating layer 136 can effectively prevent the heat in the combustion chamber 102 from being diffusing outward, and connection strength between the heat insulating layer 136 and the ignition member 1 is high.

In an example, the engine ignition system further includes a control device 108. The control device 108 is configured to control, in response to a rotation speed of the engine, the ignition member 1 to be repeatedly heated to the set temperature at a set frequency.

For example, the control device 108 is a vehicle control unit or a controller specially for an engine. A rotation speed sensor is arranged on the engine. The control device 108 is configured to obtain rotation speed information of the rotation speed sensor, to control an ignition frequency of the engine ignition system based on the rotation speed information, to adapt to the rotation speed of the engine.

Optionally, a ratio of the set frequency to the rotation speed of the engine is 0.5 or 1. For example, in a case that the engine is a four-stroke engine, the ratio of the set frequency to the rotation speed of the engine is 0.5. In other words, the ignition member 1 is heated during the compression stroke. In a case that the engine is a two-stroke engine, the ratio of the set frequency to the rotation speed of the engine is 1. In other words, the ignition member 1 is heated during the compression stroke.

In an example, the control device 108 is configured to control, in response to at least one of a position of the piston 104 of the engine, a camshaft phase of the engine, and a crank angle of the engine, a moment the ignition member 1 is heated to the set temperature.

For example, a phase sensor is arranged on the engine. The phase sensor is configured to obtain data of the at least one of the position of the piston 104, the camshaft phase of the engine, and the crank angle of the engine. The control device 108 is configured to obtain the data to control an ignition moment of the engine ignition system to adapt to operation of the engine.

In a specific example, the fuel injection is completed between 50° and 0° of the crank angle before the top dead center of the compression stroke.

During the movement of the piston 104 from the bottom dead center to the top dead center, a crankshaft rotates by 180°. In the example, the fuel injection is completed within a period of time from a time when the crankshaft is rotated by 130° from the bottom dead center to a time when the crankshaft is rotated by 180° from the bottom dead center. In other words, before the piston 104 reaches the top dead center, the fuel injection system has injected the fuel. In this manner, the fuel has enough time to be heated in the combustion chamber 102, so that the fuel can combust when the piston 104 is near the top dead center.

It should be noted that a camshaft of the engine synchronously rotates with the crankshaft. Therefore, to adjust a heating time of the fuel in the combustion chamber 102, the crank angle of the engine in the embodiments of the present disclosure may be equivalently replaced with phase information of the camshaft.

In an example, the control device 108 is configured to control the heating device 2 to heat the ignition member 1, to maintain the ignition member 1 at or above the set temperature.

For example, the control device 108 can control a magnitude of a current of the heating circuit, so that the heating device 2 heats the ignition member 1. The control device 108 determines, by obtaining a temperature of a temperature sensor 111 on the engine, whether the ignition member 1 is maintained at or above the set temperature. For example, the temperature sensor 111 can sense a temperature of the body 100. The temperature of the body 100 is usually lower than the temperature of the ignition member. In a case that the temperature sensed by the temperature sensor 111 is maintained at or above the set temperature, the ignition member 1 is maintained at or above the set temperature.

Certainly, a manner of obtaining the temperature of the ignition member 1 by the control device is not limited to that in the foregoing embodiment, which may be selected by a person skilled in the art based on the actual requirement.

According to a second embodiment of the present disclosure, an engine is provided. As shown in FIG. 2, the engine includes a body 100 and the foregoing engine ignition system. The engine ignition system is arranged on the body 100. The engine has characteristics of quick start and smooth operation.

The body 100 is provided with a control device 108, an air intake system 106, an exhaust system 107, and a fuel injection nozzle 105. A cylinder 101 is arranged in the body 100. A piston 104 is located in the cylinder 101. The piston 104 defines a combustion chamber 102 in the cylinder 101. A temperature sensor 111 is arranged outside a side wall of the body 100 opposite to the cylinder 101. The temperature sensor 111 is configured to sense a temperature of the body 100. The temperature may characterize a temperature of the combustion chamber 102. The control device 108 is electrically connected with the air intake system 106, the exhaust system 107, the fuel injection system, and the temperature sensor 111.

According to a third embodiment of the present disclosure, a transport is provided. The transport includes a movement mechanism and the foregoing engine. The engine is connected with the movement mechanism.

The transport has characteristics of energy saving and high combustion efficiency.

According to a fourth embodiment of the present disclosure, a vehicle is provided. The vehicle includes a vehicle body and the foregoing engine. The engine is arranged on the vehicle body.

The vehicle has characteristics of energy saving and high combustion efficiency.

According to a fifth embodiment of the present disclosure, an engine ignition method is provided. The ignition method includes:
injecting fuel into a combustion chamber 102; and
electrically heating an ignition portion of an ignition member to a set temperature, to cause the fuel in the combustion chamber 102 to be heated and combust, the ignition member being mounted in the combustion chamber 102 of the engine, and the set temperature being greater than or equal to an auto-ignition temperature of the fuel in the combustion chamber 102.

In the example, the fuel is first injected into the combustion chamber 102 through the ignition method. For example, during a compression stroke, the fuel is injected into the combustion chamber 102. The ignition member is electrically heated to the set temperature. Since the set temperature is greater than or equal to the auto-ignition temperature of the fuel in the combustion chamber 102, the fuel combusts in the combustion chamber 102.

In an example, the electrically heating an ignition member to a set temperature, to cause the fuel in the combustion chamber 102 to be heated and combust, the ignition member being mounted in the combustion chamber 102 of the engine, and the set temperature being greater than or equal to an auto-ignition temperature of the fuel in the combustion chamber 102 includes:
controlling, in response to a rotation speed of the engine, the ignition member to be repeatedly heated to the set temperature at a set frequency.

For example, a rotation speed sensor is arranged on the engine. Rotation speed information of the rotation speed sensor is obtained to control an ignition frequency of the engine ignition system based on the rotation speed information, to adapt to the rotation speed of the engine.

Optionally, a ratio of the set frequency to the rotation speed of the engine is 0.5 or 1. For example, in a case that the engine is a four-stroke engine, the ratio of the set frequency to the rotation speed of the engine is 0.5. In other words, the ignition member is heated during the compression stroke. In a case that the engine is a two-stroke engine, the ratio of the set frequency to the rotation speed of the engine is 1. In other words, the ignition member is heated during the compression stroke.

In an example, the electrically heating an ignition member to a set temperature, to cause the fuel in the combustion chamber 102 to be heated and combust, the ignition member being mounted in the combustion chamber 102 of the engine, and the set temperature being greater than or equal to an auto-ignition temperature of the fuel in the combustion chamber 102 includes:
controlling, in response to at least one of a position of a piston 104 of the engine, a camshaft phase of the engine, and a crank angle of the engine, a moment the ignition member is heated to the set temperature.

For example, a phase sensor is arranged on the engine. The phase sensor is configured to obtain data of the at least one of the position of the piston 104, the camshaft phase of the engine, and the crank angle of the engine. The data is obtained to control an ignition moment of the engine ignition system to adapt to operation of the engine.

In a specific example, the fuel injection is completed between 50° and 0° of the crank angle before the top dead center of the compression stroke.

During the movement of the piston 104 from the bottom dead center to the top dead center, a crankshaft rotates by 180°. In the example, the fuel injection is completed within a period of time from a time when the crankshaft is rotated by 130° from the bottom dead center to a time when the crankshaft is rotated by 180° from the bottom dead center. In other words, before the piston 104 reaches the top dead center, the fuel injection system has injected the fuel. In this manner, the fuel has enough time to be heated in the combustion chamber 102, so that the fuel can combust when the piston 104 is near the top dead center.

It should be noted that a camshaft of the engine synchronously rotates with the crankshaft. Therefore, to adjust a heating time of the fuel in the combustion chamber 102, the crank angle of the engine in the embodiments of the present disclosure may be equivalently replaced with phase information of the camshaft.

In an example, the set temperature is greater than or equal to 300°C. For example, the set temperature is greater than or equal to 400°C.

Generally, to ensure that the fuel can spontaneously combust in the combustion chamber 102, the temperature inside the combustion chamber 102 needs to be greater than 300°C. In some operating conditions, the temperature inside the combustion chamber 102 needs to be greater than 400°C, so that the fuel can spontaneously combust.

In an example, the set temperature is greater than or equal to 1.2 times the auto-ignition temperature of the fuel in the combustion chamber 102. In other words, the temperature of the ignition member reaches 1.2 times the auto-ignition temperature of the fuel.

Under the condition, the engine ignition system can ensure that the fuel injected by the fuel injection system into the combustion chamber 102 rapidly combusts.

For example, if the auto-ignition temperature of the fuel is 300°C, the set temperature is greater than or equal to 360°C. In this manner, it can be ensured that the fuel injected by the fuel injection system into the combustion chamber 102 can rapidly combust.

For example, if the auto-ignition temperature of the fuel is 400°C, the set temperature is greater than or equal to 480°C. In this manner, it can be ensured that the fuel injected by the fuel injection system into the combustion chamber 102 can rapidly combust.

Certainly, a ratio of the set temperature to the auto-ignition temperature is not limited to that in the foregoing embodiment, which may be selected by a person skilled in the art based on the actual requirement.

The above embodiments focus on the differences between the embodiments. The embodiments may be combined into more optimal embodiments as long as the different optimization features of the embodiments are not contradictory. For brevity, the details are not described herein again.

Although some specific embodiments of the present disclosure have been described in detail through the examples, a person skilled in the art should understand that the foregoing examples are merely for description and are not intended to limit the scope of the present disclosure. A person skilled in the art should understand that modifications may be made to the above embodiments without departing from the scope and spirit of the present disclosure. The scope of the present disclosure is defined by the appended claims.

## Claims

1. An engine ignition system, comprising:
an ignition member, the ignition member being adapted to be mounted in a combustion chamber of an engine; and
a heating device, the heating device being connected with the ignition member and configured to heat the ignition member to a set temperature, to cause fuel injected into the combustion chamber to be heated and combust, the set temperature being greater than or equal to an auto-ignition temperature of the fuel in the combustion chamber.

2. The engine ignition system according to claim 1, wherein the heating device comprises an electric heating module, the electric heating module being electrically connected with the ignition member.

3. The engine ignition system according to claim 2, wherein the ignition member comprises a housing adapted to be mounted in the combustion chamber, the housing defining an ignition cavity configured to connect to a fuel injection system, the housing being provided with a through hole, and the ignition cavity being configured to be brought into communication with the combustion chamber through the through hole.

4. The engine ignition system according to claim 3, further comprising a heat insulating layer, the heat insulating layer being arranged on an outer wall of the housing.

5. The engine ignition system according to claim 3 or 4, wherein at least part of the housing is spherical, and a plurality of through holes are provided, the plurality of through holes being uniformly distributed on the housing.

6. The engine ignition system according to any of claims 3 to 5, wherein the electric heating module is electrically connected with the housing and configured to heat the housing to the set temperature.

7. The engine ignition system according to claim 6, wherein the housing is made of a nickel-chromium alloy.

8. The engine ignition system according to any of claims 1 to 7, wherein the set temperature is greater than or equal to 300°C.

9. The engine ignition system according to any of claims 1 to 8, wherein the set temperature is greater than or equal to 400°C.

10. The engine ignition system according to any of claims 1 to 7, wherein the set temperature is greater than or equal to 1.2 times the auto-ignition temperature of the fuel in the combustion chamber.

11. The engine ignition system according to any of claims 1 to 10, further comprising a control device, the control device being configured to control, in response to a rotation speed of the engine, the ignition member to be repeatedly heated to the set temperature at a set frequency.

12. The engine ignition system according to claim 11, wherein a ratio of the set frequency to the rotation speed of the engine is 0.5 or 1.

13. The engine ignition system according to claim 11 or 12, wherein the control device is configured to control, in response to at least one of a position of a piston of the engine, a camshaft phase of the engine, and a crank angle of the engine, a moment the ignition member is heated to the set temperature.

14. The engine ignition system according to any of claims 1 to 10, further comprising a control device, the control device being configured to control the heating device to heat the ignition member, to maintain the ignition member at or above the set temperature.

15. An engine, comprising a body and the engine ignition system according to any of claims 1 to 14, the engine ignition system being arranged on the body.

16. A transport, comprising a movement mechanism and the engine according to claim 15, the engine being connected with the movement mechanism.

17. A vehicle, comprising a vehicle body and the engine according to claim 15, the engine being arranged on the vehicle body.

18. An engine ignition method, comprising:
injecting fuel into a combustion chamber; and
electrically heating an ignition member to a set temperature, to cause the fuel in the combustion chamber to be heated and combust, the ignition member being mounted in the combustion chamber of the engine, and the set temperature being greater than or equal to an auto-ignition temperature of the fuel in the combustion chamber.

19. The engine ignition method according to claim 18, wherein the electrically heating an ignition member to a set temperature, to cause the fuel in the combustion chamber to be heated and combust, the ignition member being mounted in the combustion chamber of the engine, and the set temperature being greater than or equal to an auto-ignition temperature of the fuel in the combustion chamber comprises:
controlling, in response to a rotation speed of the engine, the ignition member to be repeatedly heated to the set temperature at a set frequency.

20. The engine ignition method according to claim 19, wherein a ratio of the set frequency to the rotation speed of the engine is 0.5 or 1.

21. The engine ignition method according to any of claims 18 to 20, wherein the electrically heating an ignition member to a set temperature, to cause the fuel in the combustion chamber to be heated and combust, the ignition member being mounted in the combustion chamber of the engine, and the set temperature being greater than or equal to an auto-ignition temperature of the fuel in the combustion chamber comprises:
controlling, in response to at least one of a position of a piston of the engine, a camshaft phase of the engine, and a crank angle of the engine, a moment the ignition member is heated to the set temperature.

22. The engine ignition method according to any of claims 18 to 21, wherein the ignition member is heated between 50° and 0° before a top dead center of a compression stroke.

23. The engine ignition method according to any of claims 18 to 22, wherein the set temperature is greater than or equal to 400°C.

24. The engine ignition method according to any of claims 18 to 22, wherein the set temperature is greater than or equal to 1.2 times the auto-ignition temperature of the fuel in the combustion chamber.
